## Europäisches Patentamt

## European Patent Office

## Office européen des brevets

(19)

(11) Veröffentlichungsnummer: **0 184 164**
**A2**

(12) **EUROPÄISCHE PATENTANMELDUNG**

(21) Anmeldenummer: 85115208.2

(22) Anmeldetag: 30.11.85

(51) Int. Cl.⁴: **C 01 B 3/36**

(30) Priorität: 05.12.84 DE 3444336

(43) Veröffentlichungstag der Anmeldung:
**11.06.86 Patentblatt 86/24**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Gettert, Hans, Dr.**
**St.-Wendelinus-Strasse 20**
**D-6942 Moerlenbach(DE)**

(72) Erfinder: **Detmer, Ottheinrich, Dr.**
**Gontardstrasse 10**
**D-6800 Mannheim 1(DE)**

(72) Erfinder: **Horn, Robert K. Dr.**
**Edenkobener Strasse 1**
**D-6700 Ludwigshafen(DE)**

(72) Erfinder: **Kaempfer, Knut, Dr.**
**Petersstrasse 1**
**D-6700 Ludwigshafen(DE)**

(54) **Verfahren und Brenner für die partielle Oxidation von schweren Kohlenwasserstoffen.**

(57) Die Anmeldung betrifft ein Verfahren zur Herstellung von Synthesegasen durch partielle Oxidation von schweren Kohlenwasserstoffen mittels Sauerstoff oder an Sauerstoff angereicherten Gasen in Gegenwart von Wasser oder Wasserdampf in einem geeigneten Brenner, bestehend aus einem Innenrohr und einem Außenrohr, welche konzentrisch angeordnet sind und zusammen ein konisches Brennermundstück bilden, wobei das Außenrohr mit Kühleinrichtungen versehen ist, und bei dem das sauerstoffreiche Gas durch das Innenrohr und der schwere Kohlenwasserstoff zusammen mit dem Wasser bzw. dem Wasserdampf durch das Außenrohr geführt wird. Die Erfindung besteht darin, daß das Innenrohr in seinem Durchmesser so bemessen wird, daß das sauerstoffreiche Gas unter Berücksichtigung seiner Temperatur und seines Druckes eine mittlere lineare Geschwindigkeit von mindestens 150 m·sec hat. Durch die Formgebung der Mündung des Innenrohres wird vermiden, daß sich das sauerstoffreiche Gas von der Rohrwand ablöst und beim Austritt aus dem Innenrohr Wirbel bildet.

Verfahren und Brenner für die partielle Oxidation von schweren Kohlenwasserstoffen

Die Erfindung betrifft ein Verfahren und einen Brenner für die partielle Oxidation von schweren Kohlenwasserstoffen für die Herstellung von Synthesegas mittels sauerstoffreichen Gasen und in Gegenwart von Wasser oder Wasserdampf.

Es ist bekannt, flüssige Kohlenwasserstoffe und auch schwere Kohlenwasserstoffe durch partielle Oxidation mittels Sauerstoff oder an Sauerstoff angereicherten Gasen in ein Gasgemisch bestehend aus Kohlenmonoxid und Wasserstoff neben mehr oder weniger Kohlendioxid, Wasserdampf, nicht umgesetzten gasförmigen Kohlenwasserstoffen und freien Kohlenstoff umzusetzen. Die Kohlenwasserstoffe werden bei hohen Temperaturen von 1300 bis 1500°C mit Sauerstoff und Dampf praktisch vollständig umgesetzt.

Die Ausgangsstoffe werden in üblicher Weise über einen Brenner zugeführt, der aus zwei konzentrisch angeordneten Rohren besteht. Dabei wird die Mischung aus Kohlenwasserstoffen und Wasserdampf durch das Außenrohr und der Sauerstoff durch das Innenrohr eingeführt. Das Außenrohr ist üblicherweise durch eine Wasserkühlung geschützt. Beim Innenrohr ist eine solche Kühlung nicht ohne beträchtlichen apparativen Aufwand möglich und daher auch nicht gebräuchlich. Der Verschleiß am Innenrohr ist deshalb erheblich höher als am wassergekühlten Außenrohr. Bei Verarbeitung von höhersiedenden Ausgangstoffen, die heute angestrebt wird, nimmt der Verschleiß soweit zu, daß nur Betriebszeiten von wenigen Tagen erzielt werden.

Es wurde nun gefunden, daß man bei der Herstellung von Synthesegas durch partielle Oxidation von insbesondere schweren Kohlenwasserstoffen mittels sauerstoffreichen Gasen in Gegenwart von Wasser oder Wasserdampf die oben genannten Nachteile vermeidet und längere Betriebszeiten erzielt, wenn man einen Brenner verwendet, dessen Innenrohr in seinem Durchmesser so bemessen ist, daß das sauerstoffreiche Gas unter Berücksichtigung seiner Temperatur und seines Druckes eine mittlere Lineargeschwindigkeit von mindestens 150 m/sec hat.

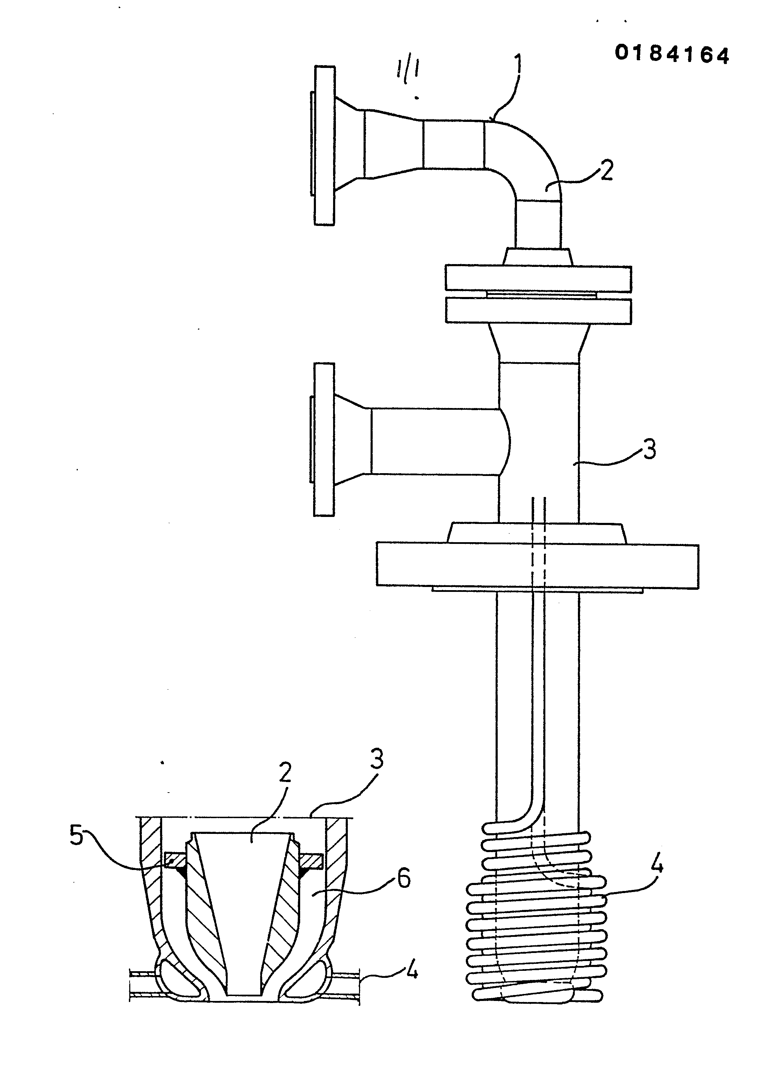

Ein geeigneter Brenner für die Herstellung von Synthesegas durch partielle Oxidation von insbesondere schweren Kohlenwasserstoffen mittels sauerstoffreicher Gase in Gegenwart von Wasser oder Wasserdampf ist in der Zeichnung wiedergegeben.

Der Brenner (1) besteht aus einem Innenrohr (2) und einem Außenrohr (3) die konzentrisch zueinander angeordnet sind und zusammen ein konisches

Gr/ro

0184164

Brennermundstück (6) bilden, wobei das Außenrohr mit Kühleinrichtungen (4) versehen ist. Der Sauerstoff oder das an Sauerstoff angereicherte Gas, gegebenenfalls zusammen mit einem Teil des Wassers oder des Wasserdampfes wird durch das Innenrohr (2) eingeführt, der schwere Kohlenwasserstoff zusammen mit dem Wasser oder Wasserdampf bzw. einem Teil desselben durch das Außenrohr (3).

Die koaxiale Stellung des Innenrohres (2) zum Außenrohr (3) Brennermundstück wird durch die Distanzhalter (5) bewirkt.

Durch das erfindungsgemäße Verfahren bzw. durch die erfindungsgemäße Brennerausführung wird die Lebensdauer des Innenrohres erheblich verlängert und auch bei Verwendung sehr hoch viskoser Ausgangsstoffe eine ausreichend lange Betriebszeit erzielt. Es ist vorteilhaft, der Mündung des Innenrohres des Brenners eine Form zu geben, bei der sich das sauerstoffreiche Gas von der Rohrwand nicht ablöst, so daß beim Austritt aus dem Innenrohr keine Wirbelbildung auftritt. In einer besonderen Ausführungsform wird die Mündung des Innenrohres des Brenners aus einem keramischen temperaturbeständigen und nicht-brennbaren Material ausgeführt. Man kann auch einen wesentlichen Teil des zugeführten Wasserdampfes anstatt den schweren Kohlenwasserstoffen die durch das Außenrohr geführt werden nunmehr dem Sauerstoff oder den an Sauerstoff angereicherten Oxidationsmittel im Innenrohr beizugeben.

Es wurde vorgeschlagen eine bestimmte Differenz in den Austrittsgeschwindigkeiten des Sauerstoffs einerseits und des Kohlenwasserstoff/Wasserdampfgemisches andererseits aus den betreffenden Brenneröffnungen einzuhalten. Dadurch soll insbesondere eine besere Mischung zwischen den Kohlenwasserstoffen und dem Sauerstoff erzielt werden.

Es wurde weiterhin gefunden, daß es bei der Vergasung von sehr schweren, d.h. hoch viskosen und hoch schwefelhaltigen Kohlenwasserstoffen, z.B. Vakuum-Rückständen, nicht nur auf die Differenz in den Geschwindigkeiten ankommt, sondern daß auch eine Mindest-Absolutgeschwindigkeit des sauerstoffhaltigen Gases erforderlich ist, wenn man den sonst auftretenden starken Verschleiß an der Mündung des Innenrohres vermeiden will. Die dafür benötigten Geschwindigkeiten sind höher als 150 m/sec.

Bei Einhaltung dieser Mindestgeschwindigkeit ergibt sich als zusätzlicher Vorteil ein weiter verbesserter Vergasungswirkungsgrad, d.h., daß der Gehalt des erzeugten Synthesegases an Ruß und leichteren Kohlenwasserstoffen gegenüber den üblichen Arbeitsweisen weiter verringert ist.

Außerdem wird die Ablagerung von Aschebestandteilen im Generator zurückgedrängt.

Es ist zweckmäßig, in dem Strom des sauerstoffhaltigen Gases eine mittlere lineare Geschwindigkeit von mindestens 150 m/sec, vorzugsweise 160 bis 200 m/sec einzuhalten. Die Kohlenwasserstoffe können mit den bisher üblichen Geschwindigkeiten, d.h. mit 1 bis 5 m/sec durch das Außenrohr eingebracht werden. Die Temperatur im Vergasungsraum liegt wie bisher üblich im Bereich zwischen 1300 und 1500°C.

**Patentansprüche**

1. Verfahren zur Herstellung von Synthesegasen durch partielle Oxidation von schweren Kohlenwasserstoffen mittels Sauerstoff oder an Sauerstoff angereicherten Gasen in Gegenwart von Wasser oder Wasserdampf in einem geeigneten Brenner, bestehend aus einem Innenrohr und einem Außenrohr, welche konzentrisch angeordnet sind und zusammen ein konisches Brennermundstück bilden, wobei das Außenrohr mit Kühleinrichtungen versehen ist, und bei dem das sauerstoffreiche Gas durch das Innenrohr und der schwere Kohlenwasserstoff zusammen mit dem Wasser bzw. dem Wasserdampf durch das Außenrohr geführt wird, dadurch gekennzeichnet, daß das Innenrohr in seinem Durchmesser so bemessen ist, daß das sauerstoffreiche Gas unter Berücksichtigung seiner Temperatur und seines Druckes eine mittlere lineare Geschwindigkeit von mindestens 150 m/sec hat.

2. Brenner für die Herstellung von Synthesegas nach Anspruch 1 durch partielle Oxidation von insbesondere schweren Kohlenwasserstoffen mittels sauerstoffreichen Gasen und in Gegenwart von Wasser oder Wasserdampf, bestehend aus einem Innenrohr (2) und einem Außenrohr (3), welche konzentrisch angeordnet sind und zusammen ein konisches Brennermundstück (6) bilden, wobei das Außenrohr mit Kühleinrichtungen (4) versehen ist, und bei dem das sauerstoffreiche Gas und gegebenenfalls ein Teil des Wasserdampfes bzw. Wassers durch das Innenrohr und der schwere Kohlenwasserstoff zusammen mit dem Wasser bzw. dem Wasserdampf durch das Außenrohr zugeführt wird, dadurch gekennzeichnet, daß die Mündung des Innenrohres eine solche Form erhält, daß sich das sauerstoffreiche Gas von der Rohrwand nicht ablöst und beim Austritt aus dem Innenrohr keine Wirbel bildet.

3. Brenner gemäß Anspruch 2, dadurch gekennzeichnet, daß die Mündung des Innenrohres aus einem keramischen, temperaturbeständigen und nicht brennbaren Material besteht.

Zeichn.